# EUROPEAN PATENT APPLICATION

(11) **EP 4 546 310 A1**
(43) Date of publication of application: **30.04.2025**
(21) Application number: 23827358.5
(22) Date of filing: 26.04.2023
(51) Int. Cl.: G09F 3/00, G06F 1/16, H04M 1/02, H05K 5/06

(54) **ELECTRONIC DEVICE INCLUDING INDICATOR LABEL**

(30) Priority: 24.06.2022 KR 20220077866; 13.07.2022 KR 20220086599
(71) Applicant: Samsung Electronics Co., Ltd., Suwon-si, Gyeonggi-do 16677 (KR)
(72) Inventor: LEE, Seunghoon, Suwon-si Gyeonggi-do 16677 (KR); KIM, Kyungpil, Suwon-si Gyeonggi-do 16677 (KR); KIM, Dooryong, Suwon-si Gyeonggi-do 16677 (KR); KIM, Sanghyun, Suwon-si Gyeonggi-do 16677 (KR); KIM, Jongyoon, Suwon-si Gyeonggi-do 16677 (KR); SON, Kwonho, Suwon-si Gyeonggi-do 16677 (KR); LEE, Ohhee, Suwon-si Gyeonggi-do 16677 (KR); CHOI, Jongchul, Suwon-si Gyeonggi-do 16677 (KR)
(74) Representative: HGF
(86) International application number: PCT/KR2023/005712
(87) International publication number: WO 2023/249238

(57) **Abstract**

An electronic device according to an embodiment includes a housing including a through hole connecting the outside and the inside of the electronic device, a printed circuit board disposed in the housing, an interface bracket having a portion disposed within the through hole and another portion facing one surface of the printed circuit board, a sealing member surrounding the portion of the interface bracket and being in contact with the inner surface of the through hole, and an indicator label for surrounding the one surface of the printed circuit board and a side surface of the printed circuit board facing the through hole, wherein the indicator label is deformable by moisture introduced from the outside of the electronic device via the through hole.

## Description

### [Technical Field]

The present disclosure relates to an electronic device including an indicator label.

### [Background Art]

An electronic device may include electronic components capable of implementing various functions in response to a user's demand. As the user carries the electronic device, the electronic device may be exposed to various environments. For example, the electronic device may be exposed to an environment in which moisture capable of damaging the electronic components in the electronic device may be introduced into the electronic device.

### [Disclosure]

### [Technical Solution]

An electronic device according to an embodiment may include a housing including a through hole connecting the outside of the electronic device and the inside of the electronic device. According to an embodiment, the electronic device may include a printed circuit board disposed within the housing. According to an embodiment, the electronic device may include an interface bracket having a portion of the interface bracket disposed within the through hole and another portion facing a surface of the printed circuit board. According to an embodiment, the electronic device may include a sealing member surrounding the portion of the interface bracket and contacting an inner surface of the through hole. According to an embodiment, the electronic device may include an indicator label surrounding the surface of the printed circuit board and a lateral surface of the printed circuit board facing the through hole. According to an embodiment, the indicator label may be deformable by moisture introduced from the through hole from the outside of the electronic device.

According to an embodiment, an electronic device may include a display. According to an embodiment, the electronic device may include a housing including a seating surface facing the display, a lateral surface surrounding the periphery of the display, and a through hole penetrating the lateral surface. According to an embodiment, the electronic device may include a printed circuit board disposed within the housing. According to an embodiment, the electronic device may include an interface circuit disposed on a surface of the printed circuit board. According to an embodiment, the electronic device may include an interface bracket, detachably coupled to the housing, having a portion of the interface bracket disposed within the through hole, and having another portion facing a surface of the printed circuit board, in a state of being inserted into the through hole. According to an embodiment, the electronic device may include a sealing member surrounding the portion of the interface bracket disposed in the through hole, and contacting an inner surface of the through hole. According to an embodiment, the electronic device may include an indicator label that surrounds the surface of the printed circuit board and a lateral surface of the printed circuit board 430 facing the through hole, and is deformable by moisture introduced through the through hole from the outside of the electronic device. According to an embodiment, the indicator label may be visible from the outside of the electronic device, in a state in which the interface bracket is extracted to the outside of the through hole.

### [Description of the Drawings]

FIG. 1 is a block diagram illustrating an electronic device in a network environment according to various embodiments.
FIG. 2 is a diagram illustrating an electronic device according to an embodiment.
FIG. 3 is an exploded perspective view of an electronic device according to an embodiment.
FIG. 4A is a perspective view of an electronic device according to an embodiment.
FIG. 4B illustrates an example of a state in which an interface bracket is extracted from a through hole, according to an embodiment.
FIG. 4C is a cross-sectional view illustrating an example of an electronic device cut along line A-A' of FIG. 4A, according to an embodiment.
FIG. 5 is a perspective view of an interface bracket and a printed circuit board according to an embodiment.
FIG. 6A is a perspective view of an indicator label and a printed circuit board according to an embodiment.
FIG. 6B is a cross-sectional view illustrating an example of an indicator label and a printed circuit board cut along line B-B' of FIG. 6A, according to an embodiment.
FIG. 7A illustrates an example of an indicator label. according to an embodiment.
FIG. 7B is a cross-sectional view illustrating a cross section of an indicator label and a printed circuit board, according to an embodiment.

### [Mode for Invention]

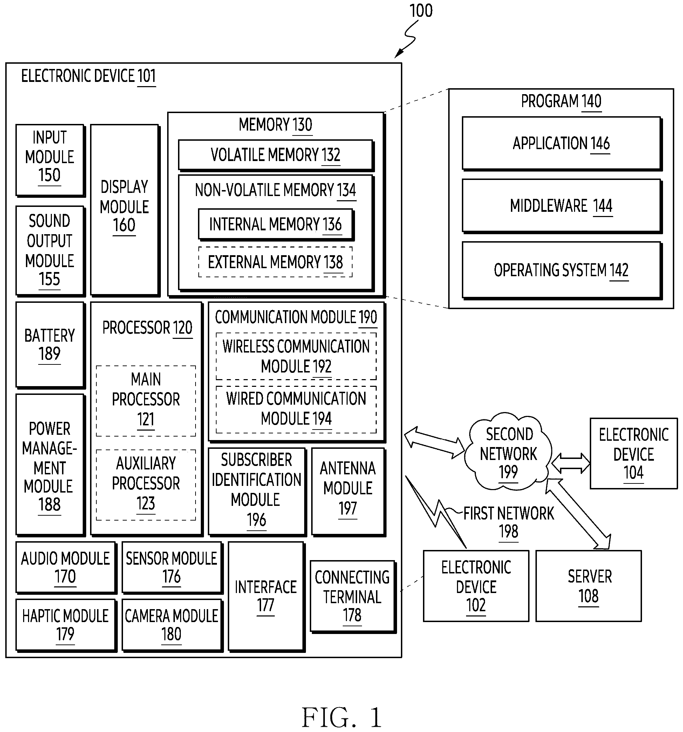

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

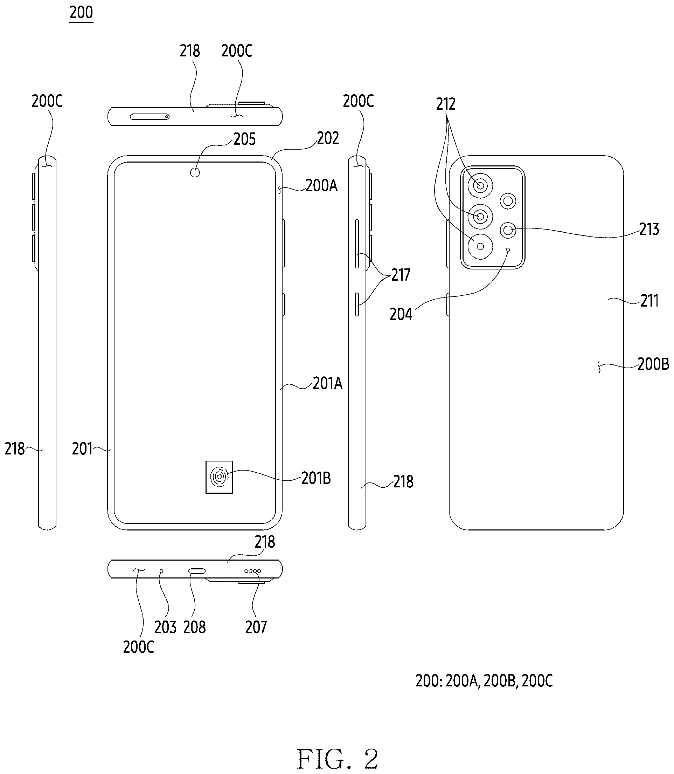

FIG. 2 is a diagram illustrating an electronic device according to an embodiment.

Referring to FIG. 2, an electronic device 200 according to an embodiment may include a housing that forms an exterior of the electronic device 200. For example, the housing may include a first surface (or a front surface) 200A, a second surface (or a rear surface) 200B, and a third surface (or a lateral surface) 200C surrounding a space between the first surface 200A and the second surface 200B. In an embodiment, the housing may refer to a structure (e.g., a frame structure 240 of FIG. 2) forming at least a portion of the first surface 200A, the second surface 200B, and/or the third surface 200C.

The electronic device 200 according to an embodiment may include a substantially transparent front plate 202. In an embodiment, the front plate 202 may form at least a portion of the first surface 200A. In an embodiment, the front plate 202 may include, for example, a glass plate, or a polymer plate including various coating layers, but is not limited thereto.

The electronic device 200 according to an embodiment may include a substantially opaque rear plate 211. In an embodiment, the rear plate 211 may form at least a portion of the second surface 200B. In an embodiment, the rear plate 211 may be formed of coated or colored glass, a ceramic, a polymer, a metal (e.g., aluminum, stainless steel (STS), or magnesium), or a combination of at least two of the above materials.

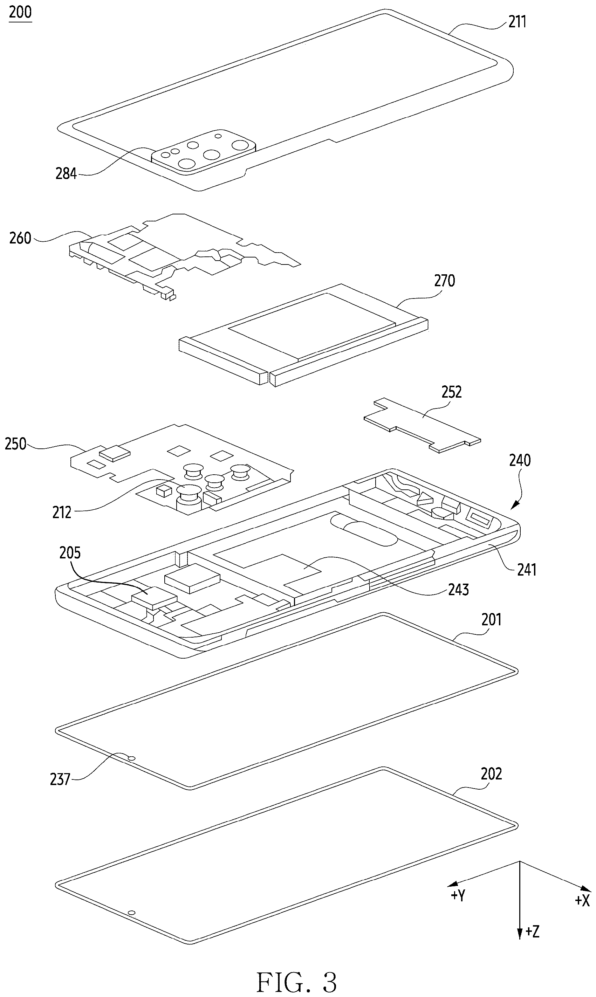

The electronic device 200 according to an embodiment may include a side bezel structure (or a side member) 218 (e.g., a sidewall 241 of the frame structure 240 of FIG. 3). In an embodiment, the side bezel structure 218 may be coupled to the front plate 202 and/or the rear plate 211 to form at least a portion of the third surface 200C of the electronic device 200. For example, the side bezel structure 218 may entirely form the third surface 200C of the electronic device 200, and for another example, the side bezel structure 218 may form the third surface 200C of the electronic device 200 together with the front plate 202 and/or the rear plate 211.

Unlike the illustrated embodiment, in case that the third surface 200C of the electronic device 200 is partially formed by the front plate 202 and/or the rear plate 211, the front plate 202 and/or the rear plate 211 may include a region that is bent toward the rear plate 211 and/or the front plate 202 from a periphery portion thereof and seamlessly extends. The extending region of the front plate 202 and/or the rear plate 211 may be located, for example, at both ends of a long edge of the electronic device 200, but is not limited by the above-described example.

In an embodiment, the side bezel structure 218 may include a metal and/or a polymer. In an embodiment, the rear plate 211 and the side bezel structure 218 may be integrally formed and may include the same material (e.g., a metallic material such as aluminum), but is not limited thereto. For example, the rear plate 211 and the side bezel structure 218 may be formed in a separate configuration and/or may include different materials.

In an embodiment, the electronic device 200 may include at least one of a display 201, audio modules 203, 204, and 207, a sensor module (not illustrated), camera modules 205, 212, and 213, a key input device 217, a light emitting element (not illustrated), and/or a connector hole 208. In another embodiment, the electronic device 200 may omit at least one (e.g., the key input device 217 or the light emitting element (not illustrated)) of the components, or may additionally include another component.

In an embodiment, the display 201 (e.g., the display module 160 of FIG. 1) may be visually exposed through a significant portion of the front plate 202. For example, at least a portion of the display 201 may be seen through the front plate 202 forming the first surface 200A. In an embodiment, the display 201 may be disposed on a back surface of the front plate 202.

In an embodiment, an outer periphery shape of the display 201 may be formed substantially the same as an outer periphery shape of the front plate 202 adjacent to the display 201. In an embodiment, in order to expand a region in which the display 201 is visually exposed, a distance between an outer periphery of the display 201 and an outer periphery of the front plate 202 may be formed substantially the same.

In an embodiment, the display 201 (or the first surface 200A of the electronic device 200) may include a screen display region 201A. In an embodiment, the display 201 may provide visual information to a user through the screen display region 201A. In the illustrated embodiment, when the first surface 200A is viewed from the front, it is described that the screen display region 201A is spaced apart from an outer periphery of the first surface 200A and located inside the first surface 200A, but is not limited thereto. In another embodiment, when the first surface 200A is viewed from the front, at least a portion of a periphery of the screen display region 201A may substantially coincide with a periphery of the first surface 200A (or the front plate 202).

In an embodiment, the screen display region 201A may include a sensing region 201B configured to obtain user's biometric information. Herein, a meaning of "the screen display region 201A includes the sensing region 201B" may be understood to mean that at least a portion of the sensing region 201B may be overlapped with the screen display region 201A. For example, the sensing region 201B may mean a region capable of displaying visual information by the display 201, like other regions of the screen display region 201A, and additionally obtaining the user's biometric information (e.g., a fingerprint). In another embodiment, the sensing region 201B may be formed in the key input device 217.

In an embodiment, the display 201 may include a region in which the first camera module 205 (e.g., the camera module 180 of FIG. 1) is located. In an embodiment, an opening may be formed in the region of the display 201, and the first camera module 205 (e.g., a punch hole camera) may be at least partially disposed in the opening to face the first surface 200A. In this case, the screen display region 201A may surround at least a portion of a periphery of the opening. In another embodiment, the first camera module 205 (e.g., an under display camera (UDC)) may be disposed under the display 201 to overlap the region of the display 201. In this case, the display 201 may provide visual information to the user through the region, and additionally, the first camera module 205 may obtain an image corresponding to a direction toward the first surface 200A through the region of the display 201.

In an embodiment, the display 201 may be coupled to or disposed adjacent to a touch sensing circuit, a pressure sensor capable of measuring intensity (pressure) of a touch, and/or a digitizer that detects a magnetic field type stylus pen.

In an embodiment, the audio modules 203, 204, and 207 (e.g., the audio module 170 of FIG. 1) may include microphone holes 203 and 204 and a speaker hole 207.

In an embodiment, the microphone holes 203 and 204 may include a first microphone hole 203 formed in a partial region of the third surface 200C and a second microphone hole 204 formed in a partial region of the second surface 200B. A microphone (not illustrated) for obtaining external sound may be disposed inside the microphone holes 203 and 204. The microphone may include a plurality of microphones to sense a direction of the sound.

In an embodiment, the second microphone hole 204 formed in the partial region of the second surface 200B may be disposed adjacent to the camera modules 205, 212, and 213. For example, the second microphone hole 204 may obtain a sound according to an operation of the camera modules 205, 212, and 213. However, it is not limited thereto.

In an embodiment, the speaker hole 207 may include an external speaker hole 207 and a call receiver hole (not illustrated). The external speaker hole 207 may be formed in a portion of the third surface 200C of the electronic device 200. In another embodiment, the external speaker hole 207 may be implemented as one hole with the microphone hole 203. Although not illustrated, the call receiver hole (not illustrated) may be formed on another portion of the third surface 200C. For example, the call receiver hole may be formed on an opposite side of the external speaker hole 207 on the third surface 200C. For example, based on the illustration of FIG. 2, the external speaker hole 207 may be formed on the third surface 200C corresponding to a lower portion of the electronic device 200, and the call receiver hole may be formed on the third surface 200C corresponding to an upper portion of the electronic device 200. However, it is not limited thereto, and in another embodiment, the call receiver hole may be formed at a position other than the third surface 200C. For example, the call receiver hole may be formed by a separated space between the front plate 202 (or the display 201) and the side bezel structure 218.

In an embodiment, the electronic device 200 may include at least one speaker (not illustrated) configured to output sound to the outside of the housing through the external speaker hole 207 and/or the call receiver hole (not illustrated).

In an embodiment, the sensor module (not illustrated) (e.g., the sensor module 176 of FIG. 1) may generate an electrical signal or a data value corresponding to an internal operating state of the electronic device 200 or an external environmental state. For example, the sensor module may include at least one of a proximity sensor, an HRM sensor, a fingerprint sensor, a gesture sensor, a gyro sensor, a barometric sensor, a magnetic sensor, an acceleration sensor, a grip sensor, a color sensor, an infrared (IR) sensor, a biometric sensor, a temperature sensor, a humidity sensor, or an illuminance sensor.

In an embodiment, the camera modules 205, 212, and 213 (e.g., the camera module 180 of FIG. 1) may include the first camera module 205 disposed toward the first surface 200A of the electronic device 200, the second camera module 212 disposed toward the second surface 200B, and the flash 213.

In an embodiment, the second camera module 212 may include a plurality of cameras (e.g., a dual camera, a triple camera, or a quad camera). However, the second camera module 212 is not necessarily limited to including a plurality of cameras, and may include one camera.

In an embodiment, the first camera module 205 and the second camera module 212 may include one or more lenses, an image sensor, and/or an image signal processor.

In an embodiment, the flash 213 may include, for example, a light emitting diode or a xenon lamp. In another embodiment, two or more lenses (an infrared camera, a wide-angle and telephoto lens) and image sensors may be disposed on a surface of the electronic device 200.

In an embodiment, the key input device 217 (e.g., the input module 150 of FIG. 1) may be disposed on the third surface 200C of the electronic device 200. In another embodiment, the electronic device 200 may not include some or all of the key input devices 217, and the excluded key input device 217 may be implemented in another form, such as a soft key, on the display 201.

In an embodiment, the connector hole 208 may be formed on the third surface 200C of the electronic device 200 to accommodate a connector of an external device. A connection terminal (e.g., the connection terminal 178 of FIG. 1) electrically connected to a connector of the external device may be disposed in the connector hole 208. The electronic device 200 according to an embodiment may include an interface module (e.g., the interface 177 of FIG. 1) for processing an electronic signal transmitted and received through the connection terminal.

According to an embodiment, the electronic device 200 may include a light emitting element (not illustrated). For example, the light emitting element (not illustrated) may be disposed on the first surface 200A of the housing. The light emitting element (not illustrated) may provide state information of the electronic device 200 in an optical form. In another embodiment, the light emitting element (not illustrated) may provide a light source in conjunction with an operation of the first camera module 205. For example, the light emitting element (not illustrated) may include an LED, an IR LED, and/or the xenon lamp.

FIG. 3 is an exploded perspective view of an electronic device according to an embodiment.

Hereinafter, an overlapping description of configuration having the same reference numeral as the above-described configuration will be omitted.

Referring to FIG. 3, an electronic device 200 according to an embodiment may include a frame structure 240, a first printed circuit board 250, a second printed circuit board 252, a cover plate 260, and a battery 270.

In an embodiment, the frame structure 240 may include a sidewall 241 forming an exterior (e.g., the third surface 200C of FIG. 2) of the electronic device 200 and a supporting portion 243 extending inward from the sidewall 241. In an embodiment, the frame structure 240 may be disposed between a display 201 and a rear plate 211. In an embodiment, the sidewall 241 of the frame structure 240 may surround a space between the rear plate 211 and a front plate 202 (and/or the display 201), and the supporting portion 243 of the frame structure 240 may extend from the sidewall 241 within the space.

In an embodiment, the frame structure 240 may support or accommodate other components included in the electronic device 200. For example, the display 201 may be disposed on a surface of the frame structure 240 facing a direction (e.g., a +z direction), and the display 201 may be supported by the supporting portion 243 of the frame structure 240. For another example, the first printed circuit board 250, the second printed circuit board 252, the battery 270, and a second camera module 212 may be disposed on another surface of the frame structure 240 facing a direction (e.g., a -z direction) opposite to the direction. The first printed circuit board 250, the second printed circuit board 252, the battery 270, and the second camera module 212 may be respectively seated in a recess defined by the sidewall 241 and/or the supporting portion 243 of the frame structure 240.

In an embodiment, the first printed circuit board 250, the second printed circuit board 252, and the battery 270 may be coupled to the frame structure 240, respectively. For example, the first printed circuit board 250 and the second printed circuit board 252 may be fixedly disposed in the frame structure 240 through a coupling member such as a screw. For example, the battery 270 may be fixedly disposed in the frame structure 240 through an adhesive member (e.g., a double-sided tape). However, it is not limited by the above-described example.

In an embodiment, the cover plate 260 may be disposed between the first printed circuit board 250 and the rear plate 211. In an embodiment, the cover plate 260 may be disposed on the first printed circuit board 250. For example, the cover plate 260 may be disposed on a surface of the first printed circuit board 250 facing the -z direction.

In an embodiment, the cover plate 260 may at least partially overlap the first printed circuit board 250 with respect to the z-axis. In an embodiment, the cover plate 260 may cover at least a partial region of the first printed circuit board 250. Accordingly, the cover plate 260 may protect the first printed circuit board 250 from a physical impact or prevent detachment of a connector (e.g., the connector 234 of FIG. 3) coupled to the first printed circuit board 250.

In an embodiment, the cover plate 260 may be fixedly disposed on the first printed circuit board 250 through a coupling member (e.g., the screw), or may be coupled to the frame structure 240 together with the first printed circuit board 250 through the coupling member.

In an embodiment, the display 201 may be disposed between the frame structure 240 and the front plate 202. For example, the front plate 202 may be disposed on a side (e.g., the +z direction) of the display 201, and the frame structure 240 may be disposed on another side (e.g., the -z direction).

In an embodiment, the front plate 202 may be coupled to the display 201. For example, the front plate 202 and the display 201 may be adhered to each other through an optical adhesive member (e.g., an optically clear adhesive (OCA) or an optically clear resin (OCR)) interposed therebetween.

In an embodiment, the front plate 202 may be coupled to the frame structure 240. For example, the front plate 202 may include an outer periphery portion extending outside the display 201 when viewed in the z-axis direction, and may be attached to the frame structure 240 through an adhesive member (e.g., the double-sided tape) disposed between the outer periphery portion of the front plate 202 and the frame structure 240 (e.g., the sidewall 241). However, it is not limited by the above-described example.

In an embodiment, the first printed circuit board 250 and/or the second printed circuit board 252 may be equipped with a processor (e.g., the processor 120 of FIG. 1), a memory (e.g., the memory 130 of FIG. 1), and/or an interface (e.g., the interface 177 of FIG. 1). The processor may include, for example, one or more of a central processing unit, an application processor, a graphic processing unit, an image signal processor, a sensor hub processor, or a communication processor. The memory may include, for example, a volatile memory or a non-volatile memory. The interface may include, for example, a high definition multimedia interface (HDMI), a universal serial bus (USB) interface, an SD card interface, and/or an audio interface. The interface may electrically or physically connect the electronic device 200 to an external electronic device, and may include a USB connector, an SD card/MMC connector, or an audio connector. In an embodiment, the first printed circuit board 250 and the second printed circuit board 252 may be operatively or electrically connected to each other through a connection member (e.g., a flexible printed circuit board).

In an embodiment, the battery 270 (e.g., the battery 189 of FIG. 1) may supply power to at least one component of the electronic device 200. For example, the battery 270 may include a rechargeable secondary battery or a fuel cell. At least a portion of the battery 270 may be disposed on substantially a same plane as the first printed circuit board 250 and/or the second printed circuit board 252.

The electronic device 200 according to an embodiment may include an antenna module (not illustrated) (e.g., the antenna module 197 of FIG. 1). In an embodiment, the antenna module may be disposed between the rear plate 211 and the battery 270. The antenna module may include, for example, a near field communication (NFC) antenna, a wireless charging antenna, and/or a magnetic secure transmission (MST) antenna. The antenna module may, for example, perform short-range communication with an external device or wirelessly transmit and receive power with the external device.

In an embodiment, a first camera module 205 (e.g., a front camera) may be disposed in at least a portion (e.g., the supporting portion 243) of the frame structure 240 so that a lens may receive external light through a partial region (e.g., the camera region 237) of the front plate 202 (e.g., the front surface 200A of FIG. 2).

In an embodiment, the second camera module 212 (e.g., a rear camera) may be disposed between the frame structure 240 and the rear plate 211. In an embodiment, the second camera module 212 may be electrically connected to the first printed circuit board 250 through a connection member (e.g., a connector). In an embodiment, the second camera module 212 may be disposed so that the lens may receive the external light through a camera region 284 of the rear plate 211 of the electronic device 200.

In an embodiment, the camera region 284 may be formed on a surface (e.g., the rear surface 200B of FIG. 2) of the rear plate 211. In an embodiment, the camera region 284 may be formed at least partially transparent so that external light may be incident to the lens of the second camera module 212. In an embodiment, at least a portion of the camera region 284 may protrude from the surface of the rear plate 211 by a predetermined height. However, it is not limited thereto, and in another embodiment, the camera region 284 may form substantially the same plane as the surface of the rear plate 211.

In an embodiment, a housing of the electronic device 200 may mean a configuration or a structure forming at least a portion of the exterior of the electronic device 200. In this regard, at least a portion of the front plate 202, the frame structure 240, and/or the rear plate 211 forming the exterior of the electronic device 200 may be referred to as a housing of the electronic device 200.

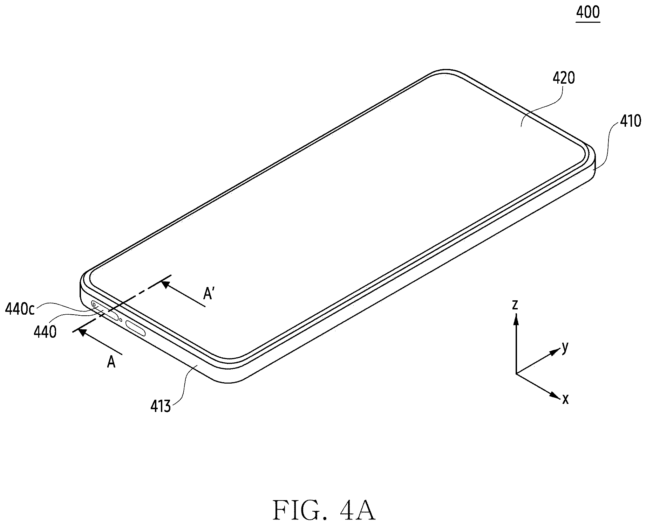

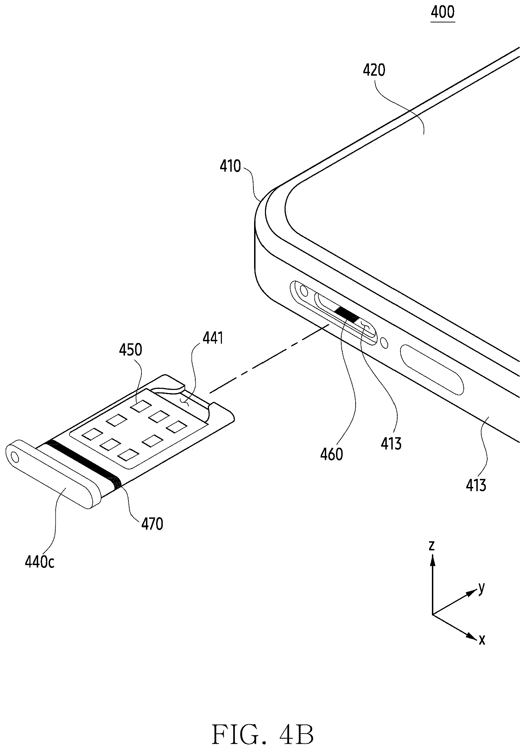

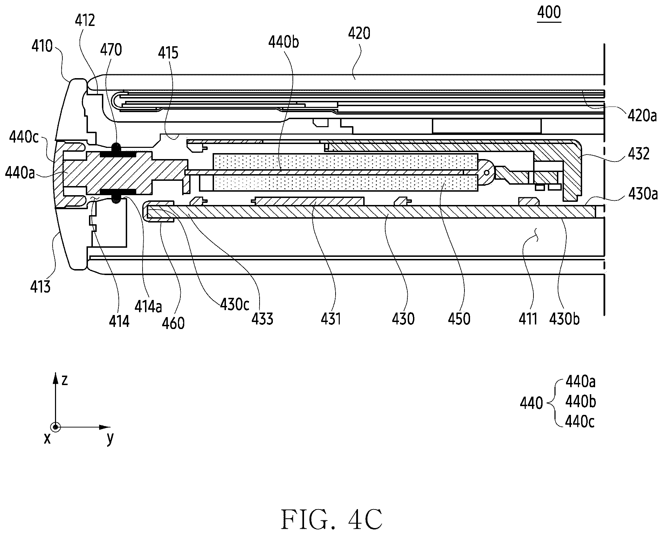

FIG. 4A is a perspective view of an electronic device according to an embodiment, FIG. 4B illustrates an example of a state in which an interface bracket is extracted from a through hole according to an embodiment, and FIG. 4C is a cross-sectional view illustrating an example of an electronic device cut along line A-A' of FIG. 4A, according to an embodiment.

Referring to FIGS. 4A, 4B, and 4C, an electronic device 400 according to an embodiment may include a housing 410, a display 420 (e.g., the display module 160 of FIG. 1, and/or the display 201 of FIG. 2 and FIG. 3), a printed circuit board 430, an interface bracket 440, an interface chip 450, an indicator label 460, and/or a sealing member 470.

The housing 410 may define at least a portion of an outer surface of the electronic device 400. According to an embodiment, the housing 410 may provide a space in which at least one component of the electronic device 400 is accommodated. For example, the housing 410 may include an inner space 411 defined within the housing 410. The housing 410 may protect at least one component disposed within the inner space 411. According to an embodiment, the housing 410 may include a seating surface 412, a lateral surface 413, and the through hole 414. The seating surface 412 may face the display 420. For example, when the display 420 is viewed vertically, the seating surface 412 may overlap the display 420 and may not be visible from the outside of the electronic device 400. The lateral surface 413 may be exposed to the outside of the electronic device 400. The lateral surface 413 may define at least a portion of an outer surface of the housing 410. The lateral surface 413 may surround the inner space 411 of the housing 410. According to an embodiment, the lateral surface 413 may surround the display420. For example, the lateral surface 413 may be spaced apart from a periphery of the display 420 and surround the periphery of the display 420. A periphery may mean a region including a boundary for distinguishing a component from another component among regions included in the component, and the corresponding expression may be used in the same manner unless otherwise stated. A through hole 414 may connect the outside of the electronic device 400 and the inside of the electronic device 400. According to an embodiment, the through hole 414 may penetrate the housing 410. For example, the through hole 414 may extend from the inner space 411 of the housing 410 to the outside of the electronic device 400. According to an embodiment, the through hole 414 may be disposed at the lateral surface 413 of the housing 410.

The display 420 may be configured to display visual information. According to an embodiment, the display 420 may be disposed on the housing 410. For example, the display 420 may be disposed on the seating surface 412 of the housing 410.

The printed circuit board 430 may establish an electrical connection of electronic components in the electronic device 400. For example, the printed circuit board 430 may electrically connect the interface chip 450 and the processor (e.g., the processor 120 of FIG. 1). According to an embodiment, the printed circuit board 430 may be disposed in the housing 410. For example, the printed circuit board 430 may be disposed in the inner space 411 of the housing 410. According to an embodiment, a surface 430a of the printed circuit board 430 may face the display 420. For example, the surface 430a of the printed circuit board 430 may face a surface 420a of the display 420 facing the inside of the housing 410. According to an embodiment, another surface 430b of the printed circuit board 430 may be opposite to the surface 430a of the printed circuit board 430. The other surface 430b of the printed circuit board 430 may face the surface 430a of the printed circuit board 430 and may be spaced apart from the surface 430a of the printed circuit board 430. For example, the other surface 430b of the printed circuit board 430 may be substantially parallel to the surface 430a of the printed circuit board 430. According to an embodiment, a lateral surface 430c of the printed circuit board 430 may be disposed between the surface 430a of the printed circuit board 430 and the other surface 430b of the printed circuit board 430. For example, the lateral surface 430c of the printed circuit board 430 may connect the surface 430a of the printed circuit board 430 and the other surface 430b of the printed circuit board 430. According to an embodiment, the lateral surface 430c of the printed circuit board 430 may be substantially perpendicular to the surface 430a of the printed circuit board 430. According to an embodiment, the lateral surface 430c of the printed circuit board 430 may face the through hole 414 of the housing 410. For example, the lateral surface 430c of the printed circuit board 430 may face the through hole 414 of the housing 410 and may be spaced apart from the through hole 414.

According to an embodiment, the printed circuit board 430 may include an interface circuit 431 (e.g., the interface 177 of FIG. 1) and/or an interface socket 432. The interface circuit 431 may be electrically connected to the interface chip 450. For example, the interface circuit 431 may be configured to receive data from the interface chip 450 and transmit the received data through the printed circuit board 430 to the processor 120. For another example, the interface circuit 431 may be configured to receive other data through the printed circuit board 430 and transmit the received other data to the interface chip 450. According to an embodiment, the interface circuit 431 may be disposed on the surface 430a of the printed circuit board 430. For example, the interface circuit 431 may be disposed on the surface 430a of the printed circuit board 430 to face the surface 420a of the display 420. According to an embodiment, the interface circuit 431 may be spaced apart from the through hole 414 of the housing 410. For example, the interface circuit 431 may be spaced apart from the through hole 414 in a direction parallel to the surface 430a of the printed circuit board 430 (e.g., a -y direction).

The interface socket 432 may protect the interface circuit 431. According to an embodiment, the interface socket 432 may be disposed on the surface 430a of the printed circuit board 430. According to an embodiment, the interface socket 432 may surround at least a portion of the interface bracket 440. For example, the interface socket 432 may surround at least a portion of the interface chip 450 disposed on the interface bracket 440. At least a portion of the interface socket 432 facing the interface chip 450 may connect a conductive pattern (not illustrated) electrically connected to the interface chip 450. According to an embodiment, the at least a portion of the interface socket 432 may have a shape bent with respect to the surface 430a of the printed circuit board 430.

The interface bracket 440 may support the interface chip 450. According to an embodiment, the interface bracket 440 may include an opening 441 for receiving the interface chip 450. The interface chip 450 may be inserted into the opening 441 of the interface bracket 440. According to an embodiment, the interface bracket 440 may be coupled to the housing 410 to be detachable with respect to the housing 410. For example, the interface bracket 440 may be inserted into the through hole 414 of the housing 410 or may be extracted from the through hole 414. According to an embodiment, a portion 440a of the interface bracket 440 may be disposed within the through hole 414 in a state in which the interface bracket 440 is inserted into the through hole 414. The portion 440a of the interface bracket 440 may be supported by an inner surface 414a of the through hole 414. According to an embodiment, another portion 440b of the interface bracket 440 may face the printed circuit board 430 in the state in which the interface bracket 440 is inserted into the through hole 414. For example, the other portion 440b of the interface bracket 440 may face the surface 430a of the printed circuit board 430. For another example, the other portion 440b of the interface bracket 440 may be disposed on the surface 430a of the printed circuit board 430. According to an embodiment, the interface bracket 440 may be surrounded by the interface socket 432 in the state in which the interface bracket 440 is inserted into the through hole 414. For example, the other portion 440b of the interface bracket 440 may be surrounded by the interface socket 432 and face the interface circuit 431. According to an embodiment, an outer surface 440c of the interface bracket 440 may be exposed to the outside of the electronic device 400 in the state in which the interface bracket 440 is inserted into the through hole 414. For example, in the state in which the interface bracket 440 is inserted into the through hole 414, among regions of the interface bracket 440, another region of the interface bracket 440 except for the outer surface 440c of the interface bracket 440 may not be exposed to the outside of the electronic device 400. For another example, the outer surface 440c of the interface bracket 440 may define the outer surface of the electronic device 400 together with the lateral surface 413 of the housing 410, in the state in which the interface bracket 440 is inserted into the through hole 414.

The interface chip 450 may be configured to store designated data. For example, the interface chip 450 may be configured to store data about an identifier for identifying a subscriber of a network (e.g., a second network 199) for long-distance wireless communication of the electronic device 400. For another example, the interface chip 450 may be configured to store data for implementing short-range wireless communication (e.g., near field communication (NFC)) of the electronic device 400. For still another example, the interface chip 450 may include data required for an operation of software (e.g., an application) of the electronic device 400. The data required for the operation of the software may include at least one of information for a user's financial payment and information about identification information (e.g., a phone number) of another electronic device capable of communicating with the electronic device 400, but is not limited thereto. According to an embodiment, the interface chip 450 may be referred to as a subscriber identification module (SIM) card, a universal subscriber identity module (USIM) card, and/or a secure digital card (SD card), but is not limited thereto.

According to an embodiment, the interface chip 450 may be disposed on the interface bracket 440. The interface chip 450 may be movable together with the interface bracket 440. For example, the interface chip 450 may be disposed on the other portion 440b of the interface bracket 440, and face the surface 430a of printed circuit board 430, in the state in which interface bracket 440 is inserted into the through hole 414. The interface chip 450 may be electrically connected to the interface circuit 431 in the state in which the interface bracket 440 is inserted into the through hole 414. As the interface chip 450 is electrically connected to the interface circuit 431, the interface chip 450 may receive or transmit data through the printed circuit board 430.

The indicator label 460 may be deformed by moisture introduced through the through hole 414 from the outside of the electronic device 400. For example, color of an outer surface of the indicator label 460 may be changed by the moisture introduced through the through hole 414. As the color of the outer surface of the indicator label 460 is changed by contact with the moisture, the indicator label 460 may visually display whether the moisture has been introduced into the inner space 411 of the housing 410. In a process of repairing the electronic device 400, a user may easily identify whether malfunction of the electronic device 400 is due to inflow of the moisture, by using the indicator label 460. According to an embodiment, the indicator label 460 may be visible from the outside of the electronic device 400 in a state in which the interface bracket 440 is extracted from the through hole 414 of the housing 410. For example, in case that the indicator label 460 is disposed on an inner surface 415 of the housing 410 facing the surface 430a of the printed circuit board 430, the indicator label 460 may not be visible from the outside of the electronic device 400 in the state in which the interface bracket 440 is extracted from the through hole 414. In case that the indicator label 460 is not visible from the outside of the electronic device 400, in the process of repairing the electronic device 400, the user may not easily check whether the moisture has been introduced into the inside of the electronic device 400. The electronic device 400 according to an embodiment may provide a structure in which the user may easily check whether the moisture has been introduced into the inside of the electronic device 400 when the electronic device 400 is repaired, by an indicator label 460 that may be visible from the outside of the electronic device 400, in the state in which the interface bracket 440 is extracted from the through hole 414.

According to an embodiment, the indicator label 460 may be disposed on the printed circuit board 430. For example, the indicator label 460 may surround the surface 430a of the printed circuit board 430 and the lateral surface 430c of the printed circuit board 430. For another example, the indicator label 460 may surround the surface 430a of the printed circuit board 430, the lateral surface 430c of the printed circuit board 430, and the other surface 430b of the printed circuit board 430. The indicator label 460 may be disposed between the interface circuit 431 and the through hole 414. For example, the indicator label 460 may be adhered to the outer surface of the printed circuit board 430 when manufacturing the electronic device 400, by including an adhesive material. According to an embodiment, the indicator label 460 may be disposed at a periphery 433 of the printed circuit board 430 facing the through hole 414. For example, the indicator label 460 may surround the periphery 433 of the printed circuit board 430 adjacent to the through hole 414. As the indicator label 460 is disposed at the periphery 433 of the printed circuit board 430 adjacent to the through hole 414, the indicator label 460 may be visible from the outside of the electronic device 400 in the state in which the interface bracket 440 is extracted from the through hole 414.

According to an embodiment, the indicator label 460 may be spaced apart from the interface bracket 440. For a smooth operation of the interface circuit 431, the indicator label 460 may be spaced apart from the interface circuit 431. For example, in case that the indicator label 460 is disposed on only the surface 430a of the printed circuit board 430, a size of a space occupied by the indicator label 460 on the surface 430a of the printed circuit board 430 may be increased than in case that the indicator label 460 surrounds the lateral surface 430c of the printed circuit board 430. Since the indicator label 460 and the interface circuit 431 should be spaced apart from each other, as the size of the space occupied by the indicator label 460 on the surface 430a of the printed circuit board 430 increases, a space in which the interface circuit 431 is to be disposed may become insufficient. In order to secure the space in which the interface circuit 431 is to be disposed, when a size of the printed circuit board 430 increases in a direction (e.g., a +y direction) away from the through hole 414, a space for disposing components (e.g., the battery 189 of FIG. 1) in the electronic device 400 may be insufficient. The electronic device 400 according to an embodiment may provide a structure in which a cause of failure may be easily checked when the electronic device 400 is repaired, while securing the space for disposing the components in the electronic device 400, by the indicator label 460 surrounding the lateral surface 430c of the printed circuit board 430.

The sealing member 470 may block inflow of the moisture from the outside of the electronic device 400 into the inside of the electronic device 400. For example, the sealing member 470 may seal the through hole 414 of the housing 410. The sealing member 470 may seal the through hole 414 to block the moisture from the inflow into the inner space 411 of the housing 410 through the through hole 414 of the housing 410. According to an embodiment, the sealing member 470 may be disposed on the portion 440a of the interface bracket 440 and may contact the inner surface 414a of the through hole 414. For example, the sealing member 470 may surround the portion 440a of the interface bracket 440. The sealing member 470 may fill a gap between the portion 440a of the interface bracket 440 and the inner surface 414a of the through hole 414. For example, the sealing member 470 may be made of an elastic and deformable material (e.g., rubber), but is not limited thereto.

According to an embodiment, in case that a user normally uses the electronic device 400, the interface bracket 440 may maintain a state inserted into the through hole 414. For example, the interface bracket 440 may remain the state inserted into the through hole 414, except in case that the interface chip 450 is replaced by the user. In case that the user normally uses the electronic device 400, as the interface bracket 440 is inserted into the through hole 414, the through hole 414 may remain the state sealed by the sealing member 470. In case that the user normally uses the electronic device 400, as the through hole 414 remains the state sealed by the sealing member 470, the indicator label 460 inside the housing 410 may not be deformed by the moisture. Deformation due to the moisture of the indicator label 460 disposed inside the housing 410 may mean that the user has carelessly used the electronic device 400 abnormally. For example, in case that the indicator label 460 disposed inside the housing 410 is deformed by the moisture, occurrence of penetration of the moisture into the housing 410 may be easily checked in an abnormal state in which the interface bracket 440 is extracted from the through hole 414. The electronic device 400 according to an embodiment may provide a structure capable of easily checking whether the penetration of the moisture into the housing 410 is caused by user's carelessness, by the sealing member 470 sealing the through hole 414.

As described above, the electronic device 400 according to an embodiment may provide a structure in which the cause of failure of the electronic device 400 may be easily checked by the visible indicator label 460 in a state in which the interface bracket 440 is extracted from the through hole 414. The electronic device 400 according to an embodiment may provide a structure capable of easily checking the inflow of the moisture into the housing 410 when the electronic device 400 is repaired, while securing a space for disposing components in the electronic device 400, by the indicator label 460 surrounding the lateral surface 430c of the printed circuit board 430 facing the through hole 414. The electronic device 400 according to an embodiment may provide a structure capable of easily checking whether the inflow of the moisture into the housing 410 is caused by abnormal use of the electronic device 400, by the sealing member 470 sealing the through hole 414.

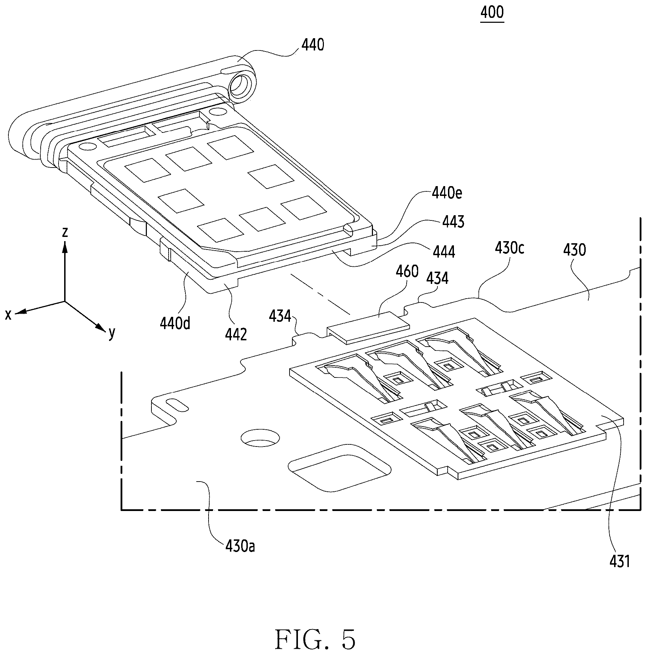

FIG. 5 is a perspective view of an interface bracket and a printed circuit board according to an embodiment.

Referring to FIG. 5, a printed circuit board 430 according to an embodiment may include at least one protective protrusion 434. The at least one protective protrusion 434 may reduce damage to an indicator label 460 by an impact transmitted from the outside of the printed circuit board 430. According to an embodiment, the at least one protective protrusion 434 may be disposed on a lateral surface 430c of the printed circuit board 430. For example, the at least one protective protrusion 434 may protrude from the lateral surface 430c of the printed circuit board 430. For another example, the at least one protective protrusion 434 may extend in a direction (e.g., a -y direction) in which the lateral surface 430c of the printed circuit board 430 faces. For example, in a process of disposing an interface bracket 440 on a surface 430a of the printed circuit board 430, the lateral surface 430c of the printed circuit board 430 may collide with the interface bracket 440. In case that at least one protective protrusion 434 is not disposed on the lateral surface 430c of the printed circuit board 430, when the lateral surface 430c of the printed circuit board 430 and the interface bracket 440 collide, the indicator label 460 may be damaged by the interface bracket 440. The electronic device 400 according to an embodiment may provide a structure capable of reducing damage to the indicator label 460 by the interface bracket 440, by at least one protective protrusion 434 disposed on the lateral surface 430c of the printed circuit board 430.

According to an embodiment, the interface bracket 440 may include a first protrusion 442, a second protrusion 443, and/or a connecting portion 444. The first protrusion 442 and the second protrusion 443 may separate a portion (e.g., the connecting portion 444) of the interface bracket 440 facing the surface 430a of the printed circuit board 430 from the surface 430a of the printed circuit board 430. According to an embodiment, the first protrusion 442 may be disposed at a first periphery 440d of the interface bracket 440. The second protrusion 443 may be disposed at a second periphery 440e facing the first periphery 440d of the interface bracket 440. The second periphery 440e may be spaced apart from the first periphery 440d. An interface circuit 431 may be disposed between the first periphery 440d and the second periphery 440e when the interface bracket 440 is disposed on the interface circuit 431. The first protrusion 442 may be in contact with the surface 430a of the printed circuit board 430 when the interface bracket 440 is disposed on the interface circuit 431. The second protrusion 443 may be in contact with the surface 430a of the printed circuit board 430 when the interface bracket 440 is disposed on the interface circuit 431. According to an embodiment, the first protrusion 442 and the second protrusion 443 may extend in a direction (e.g., a +y direction or a -y direction) parallel to a moving direction of the interface bracket 440. The connecting portion 444 may be disposed between the first protrusion 442 and the second protrusion 443. According to an embodiment, the connecting portion 444 may extend from the first protrusion 442 to the second protrusion 443. For example, the connecting portion 444 may extend in a direction (e.g., a +x direction or a -x direction) perpendicular to a moving direction (e.g., the +y direction or the -y direction) of the interface bracket 440. According to an embodiment, the connecting portion 444 may be spaced apart from the surface 430a of the printed circuit board 430 when the interface bracket 440 is disposed on the interface circuit 431. For example, when the interface bracket 440 is disposed on the interface circuit 431, the connecting portion 444 may be spaced apart from the surface 430a of the printed circuit board 430 in a direction (e.g., a +z direction) in which the surface 430a of the printed circuit board 430 faces.

According to an embodiment, the indicator label 460 may be disposed between the first protrusion 442 and the second protrusion 443 of the interface bracket 440. The interface bracket 440 may be spaced apart from the first protrusion 442 and the second protrusion 443. For example, the indicator label 460 may be positioned between the first protrusion 442 and the second protrusion 443 while the interface bracket 440 moves with respect to the surface 430a of the printed circuit board 430. For another example, the indicator label 460 may be disposed between the first protrusion 442 and the second protrusion 443 in a state in which the interface bracket 440 is disposed on the surface 430a of the printed circuit board 430. For example, in case that at least one of the first protrusion 442 and the second protrusion 443 is not disposed on the interface bracket 440, a portion of the interface bracket 440 facing the surface 430a of the printed circuit board 430 may contact the indicator label 460 while moving with respect to the surface 430a of the printed circuit board 430. When the at least one of the first protrusion 442 and the second protrusion 443 is not disposed on the interface bracket 440, the indicator label 460 may be damaged by contact with the interface bracket 440. The electronic device 400 according to an embodiment may provide a structure for reducing damage to the indicator label 460 by the interface bracket 440, by the first protrusion 442 and the second protrusion 443 separating a portion of the interface bracket 440 from the surface 430a of the printed circuit board 430.

As described above, the electronic device 400 according to an embodiment may provide a structure capable of reducing damage to the indicator label 460 by the interface bracket 440, by the protective protrusion 434 of the printed circuit board 430. The electronic device 400 according to an embodiment may provide a structure capable of reducing damage to the indicator label 460 by the interface bracket 440 partially spaced apart from the surface 430a of the printed circuit board 430.

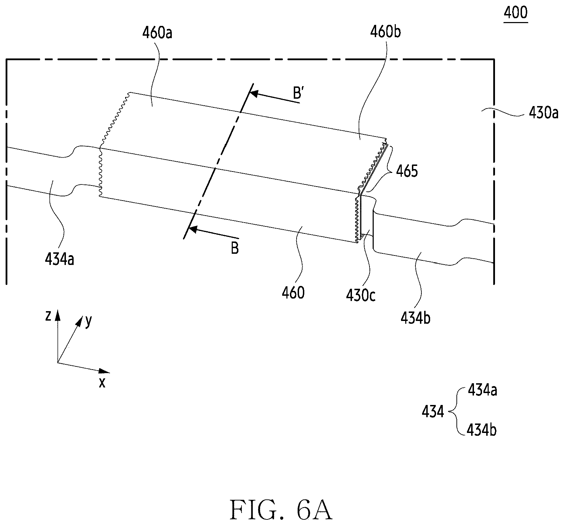

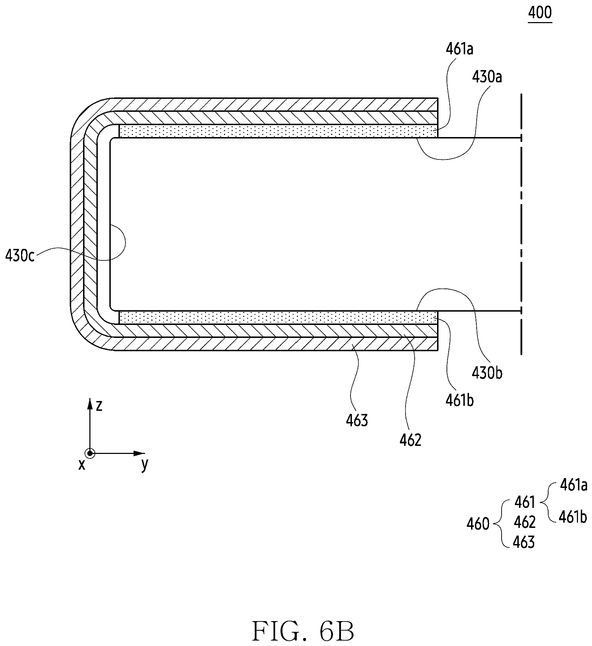

FIG. 6A is a perspective view of an indicator label and a printed circuit board according to an embodiment, and FIG. 6B is a cross-sectional view illustrating an example of an indicator label and a printed circuit board cut along line B-B' of FIG. 6A, according to an embodiment.

Referring to FIGS. 6A and 6B, according to an embodiment, at least one protective protrusion 434 of a printed circuit board 430 may include a first protective protrusion 434a and a second protective protrusion 434b spaced apart from the first protective protrusion 434a. According to an embodiment, an indicator label 460 may be disposed between the first protective protrusion 434a and the second protective protrusion 434b.

According to an embodiment, the indicator label 460 may include an adhesive layer 461, a colorant layer 462, and/or an absorption layer 463. The adhesive layer 461 may maintain a coupling between the indicator label 460 and the printed circuit board 430. For example, the adhesive layer 461 may include an adhesive material in contact with an outer surface of the printed circuit board 430. The colorant layer 462 may change color of an outer surface of the indicator label 460 by contact with moisture. For example, the colorant layer 462 may include a colorant having color different from color of the absorption layer 463. According to an embodiment, the colorant layer 462 may be disposed on the adhesive layer 461. The absorption layer 463 may define the outer surface of the indicator label 460. According to an embodiment, the absorption layer 463 may be disposed on the colorant layer 462. The absorption layer 463 may absorb colorant diffused from the colorant layer 462 when the indicator label 460 is in contact with the moisture. For example, due to the contact of the indicator label 460 and the moisture, the colorant included in the colorant layer 462 may be dissolved by the moisture. The moisture including the colorant may be absorbed by the absorption layer 463 and exposed to the outer surface of the indicator label 460.

According to an embodiment, the indicator label 460 may include at least one absorption hole 465 disposed at a periphery of the indicator label 460. The at least one absorption hole 465 may penetrate the absorption layer 463. A portion of the colorant layer 462 corresponding to a position of the at least one absorption hole 465 may be exposed to the outside of the indicator label 460. As the portion of the colorant layer 462 is exposed to the outside of the indicator label 460, detection accuracy of the indicator label 460 may be improved since color of the outer surface of the indicator label 460 may also be changed by contact with a small amount of the moisture. According to an embodiment, the at least one absorption hole 465 may penetrate a periphery of the absorption layer 463. For example, the at least one absorption hole 465 may be disposed at a periphery 460a of the indicator label 460 facing the first protective protrusion 434a and/or another periphery 460b of the indicator label 460 facing the second protective protrusion 434b. According to an embodiment, the at least one absorption hole 465 may include a plurality of holes 465 spaced apart from each other. For example, the plurality of absorption holes 465 may be disposed along the periphery 460a of the indicator label 460 and/or the other periphery 460b of the indicator label 460. However, it is not limited thereto. For example, the at least one absorption hole 465 may have a shape lengthy extending along the periphery 460a of the indicator label 460 and/or the other periphery 460b of the indicator label 460.

According to an embodiment, the adhesive layer 461 may include a first adhesive portion 461a adhered to a surface 430a of the printed circuit board 430 and a second adhesive portion 461b adhered to another surface 430b of the printed circuit board 430. The second adhesive portion 461b may be spaced apart from the first adhesive portion 461a. According to an embodiment, the adhesive layer 461 may have a disconnected shape. For example, in a region of the indicator label 460 corresponding to a lateral surface 430c of the printed circuit board 430, a portion of the adhesive layer 461 may be omitted. As the portion of the adhesive layer 461 is omitted, the indicator label 460 may be spaced apart from the lateral surface 430c of the printed circuit board 430. For example, curvature of the indicator label 460 may change rapidly at a boundary of the surface 430a of the printed circuit board 430 and the lateral surface 430c of the printed circuit board 430 and/or a boundary of the other surface 430b of the printed circuit board 430 and the lateral surface 430c of the printed circuit board 430. When the portion of the adhesive layer 461 corresponding to the lateral surface 430c of the printed circuit board 430 is not omitted, the indicator label 460 may be separated from the printed circuit board 430 by a rapid change in the curvature at the boundary. The electronic device 400 according to an embodiment may provide a structure in which the indicator label 460 is stably disposed on the printed circuit board 430 as the portion of the adhesive layer 461 corresponding to the lateral surface 430c of the printed circuit board 430 is omitted.

As described above, the electronic device 400 according to an embodiment may provide a structure capable of accurately checking inflow of the moisture into the electronic device 400 by the indicator label 460 including the at least one absorption hole 465. The electronic device 400 according to an embodiment may provide a structure in which the indicator label 460 is stably coupled to the printed circuit board 430, since the lateral surface 430c of the printed circuit board 430 is spaced apart from the indicator label 460.

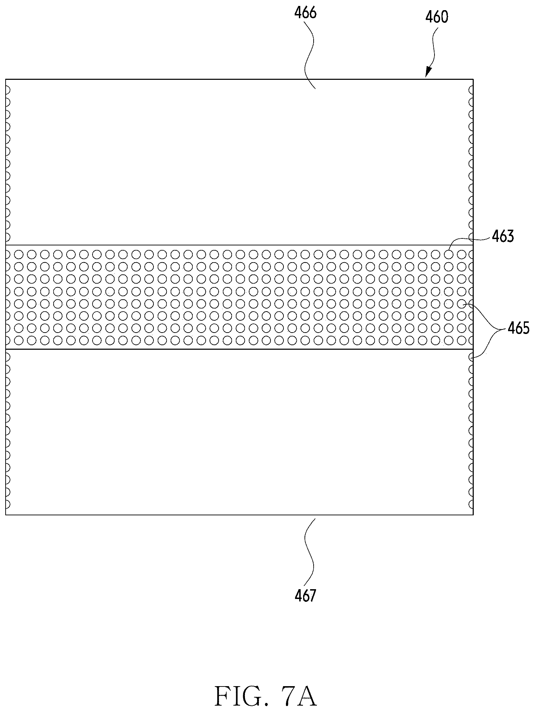

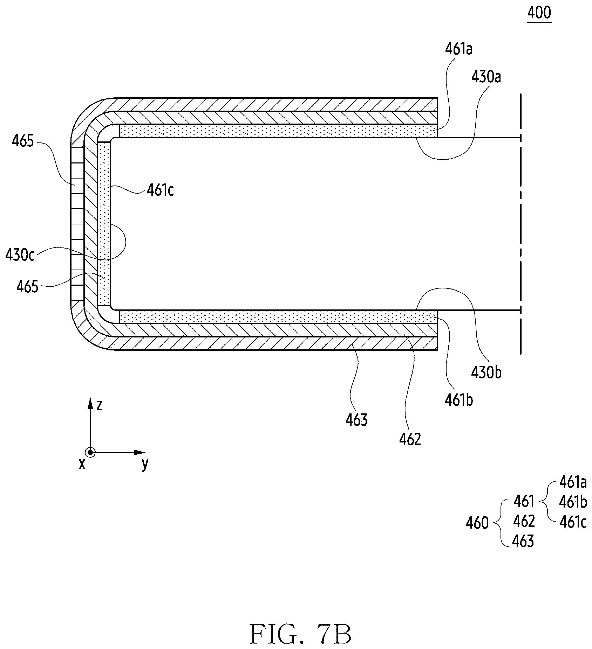

FIG. 7A illustrates an example of an indicator label according to an embodiment, and FIG. 7B is a cross-sectional view illustrating a cross section of an indicator label and a printed circuit board according to an embodiment.

An indicator label 460 of FIG. 7A and/or FIG. 7B may be the indicator label 460 in which a portion of a structure of the indicator label 460 of FIG. 6A and/or FIG. 6B is changed, and a redundant description thereof will be omitted.

According to an embodiment, the indicator label 460 may be bent before being disposed on a printed circuit board 430 so as to be easily attached to the printed circuit board 430. For example, a first region 466 of the indicator label 460 may be disposed on a surface 430a of the printed circuit board 430. A second region 467 of the indicator label 460 may be disposed on another surface 430b of the printed circuit board 430. A third region 468 of the indicator label 460 may be disposed on a lateral surface 430c of the printed circuit board 430. The third region 468 may be disposed between the first region 466 and the second region 467 spaced apart from each other, and may connect the first region 466 and the second region 467. The first region 466 may be foldable with respect to the third region 468 before being disposed on the printed circuit board 430. The second region 467 may be foldable with respect to the third region 468 before being disposed on the printed circuit board 430.

According to an embodiment, at least one absorption hole 465 may penetrate a portion of an absorption layer 463 facing the lateral surface 430c of the printed circuit board 430. For example, the at least one absorption hole 465 may penetrate the portion of the absorption layer 463 disposed in the third region 468.

According to an embodiment, an adhesive layer 461 may have a segmented shape. For example, the adhesive layer 461 may include a first adhesive portion 461a adhered to the surface 430a of the printed circuit board 430, a second adhesive portion 461b adhered to the other surface 430b of the printed circuit board 430, and a third adhesive portion 461c disposed on the lateral surface 430c of the printed circuit board 430. The third adhesive portion 461c may be spaced apart from the first adhesive portion 461a and the second adhesive portion 461b. The third adhesive portion 461c may be formed by cutting a portion of the adhesive layer 461 before the indicator label 460 is disposed on the printed circuit board 430. As the adhesive layer 461 has a segmented shape, a portion of the adhesive layer 461 corresponding to a boundary between the surface 430a of the printed circuit board 430 and the lateral surface 430c of the printed circuit board 430 and/or a boundary between the other surface 430b of the printed circuit board 430 and the lateral surface 430c of the printed circuit board 430 may be omitted. The electronic device 400 according to an embodiment may provide a structure in which the indicator label 460 is stably disposed on the printed circuit board 430 as the portion of the adhesive layer 461 is omitted.

The electronic device may include an indicator label capable of checking whether moisture has been introduced into the electronic device. For example, the indicator label may visually display whether the moisture has been introduced into the electronic device. The indicator label may be disposed in a visible position in the electronic device so that a user may quickly check whether the moisture has been introduced. In order to secure a space for mounting various components, the electronic device may need the indicator label disposed in a visible position without wasting the space for the mounting components in the electronic device.

The technical problems to be achieved in this document are not limited to those described above, and other technical problems not mentioned herein will be clearly understood by those having ordinary knowledge in the art to which the present disclosure belongs, from the following description.

The electronic device may provide a structure in which a user may easily check whether moisture has been introduced into the electronic device while securing the space for the mounting components in the electronic device by the indicator label disposed in a position visible from outside the electronic device.

The effects that can be obtained from the present disclosure are not limited to those described above, and any other effects not mentioned herein will be clearly understood by those having ordinary knowledge in the art to which the present disclosure belongs, from the following description.

An electronic device (e.g., the electronic device 400 of FIGS. 4A, 4B, and 4C) according to an embodiment may include a housing (e.g., the housing 410 of FIGS. 4A, 4B, and 4C) including a through hole (e.g., the through hole 414 of FIGS. 4A and 4C) connecting an outside of the electronic device and an inside of the electronic device. According to an embodiment, the electronic device may include a printed circuit board (e.g., the printed circuit board 430 of FIG. 4C) disposed within the housing. According to an embodiment, the electronic device may include an interface bracket (e.g., the interface bracket 440 of FIG. 4C) in which a portion (e.g., the portion 440a of the interface bracket 440 of FIG. 4C) is supported by an inner surface of the through hole, and another portion (e.g., the other portion 440b of the interface bracket 440 of FIG. 4C) faces a surface (e.g., the surface 430a the printed circuit board 430 of FIG. 4C) of the printed circuit board. According to an embodiment, the electronic device may include a sealing member (e.g., the sealing member 470 of FIG. 4C) configured to surround the portion of the interface bracket and seal the through hole. According to an embodiment, the electronic device may include an indicator label (e.g., the indicator label 460 of FIG. 4C) surrounding the surface of the printed circuit board and a lateral surface (e.g., the lateral surface 430c of the printed circuit board 430 of FIG. 4C) of the printed circuit board facing the through hole. According to an embodiment, the indicator label may be deformed by moisture introduced from the outside of the electronic device through the through hole.

According to an embodiment, the indicator label may be visible from the outside of the electronic device within a state in which the interface bracket is drawn out to an outside of the through hole.

According to an embodiment, the interface bracket may be inserted into or extracted from the through hole.

According to an embodiment, an outer surface (e.g., the outer surface 440c of the interface bracket 440 of FIG. 4C) of the interface bracket may define a portion of an outer surface of the electronic device when the interface bracket is inserted into the through hole.

According to an embodiment, the electronic device may further include an interface circuit (e.g., the interface circuit 431 of FIG. 4C) disposed on the surface of the printed circuit board. According to an embodiment, the electronic device may further include an interface chip (e.g., the interface chip 450 of FIG. 4C) that is detachably coupled to the interface bracket and electrically connected to the interface circuit.

According to an embodiment, the electronic device may further include a display (e.g., the display 420 of FIGS. 4A, 4B, and 4C) disposed on the housing. According to an embodiment, the through hole may penetrate a lateral surface (e.g., the lateral surface 413 of FIG. 4A, FIG. 4B, and FIG. 4C) of the housing surrounding the display.

According to an embodiment, the indicator label may be in contact with another surface (e.g., the other surface 430b of the printed circuit board 430 of FIG. 4C) of the printed circuit board facing the surface of the printed circuit board.

According to an embodiment, the electronic device may further include an interface socket (e.g., the interface socket 432 of FIG. 4C) disposed on the surface of the printed circuit board and surrounding the portion in a state in which the interface bracket is inserted into the through hole.

According to an embodiment, the printed circuit board may include a protective protrusion (e.g., the protective protrusion 434 of FIG. 5) extending from the lateral surface of the printed circuit board.

According to an embodiment, the interface bracket may include a first protrusion (e.g., the first protrusion 443 of FIG. 5) disposed on a periphery (e.g., the first periphery 440d of FIG. 5) of the interface bracket and in contact with the surface of the printed circuit board. According to an embodiment, the interface bracket may include a second protrusion (e.g., the second protrusion 444 of FIG. 5) disposed on another periphery (e.g., the second periphery 440e of FIG. 5) of the interface bracket opposite to the periphery of the interface bracket, in contact with the surface of the printed circuit board, and spaced apart from the first protrusion. According to an embodiment, the interface bracket may include a connecting portion (e.g., the first connecting portion 445 of FIG. 5) extending between the first protrusion and the second protrusion and spaced apart from the surface of the printed circuit board. According to an embodiment, the indicator label may be spaced apart from the interface bracket between the first protrusion and the second protrusion.

According to an embodiment, the indicator label may include an adhesive layer (e.g., the adhesive layer 461 of FIG. 6B) in contact with the printed circuit board, a colorant layer (e.g., the colorant layer 462 of FIG. 6B) disposed on the adhesive layer and including colorant dissolved in moisture, and an absorption layer (e.g., the absorption layer 463 of FIG. 6B) disposed on the colorant layer and transmitting the dissolved colorant to an outer surface of the indicator label.

According to an embodiment, the indicator label may include at least one absorption hole (e.g., the at least one absorption hole 465 of FIG. 6A) penetrating a periphery of the absorption layer.

According to an embodiment, the indicator label may include at least one absorption hole (e.g., the at least one absorption hole 465 of FIG. 6A) penetrating a portion of the absorption layer facing the lateral surface of the printed circuit board.

According to an embodiment, the adhesive layer may include a first adhesive portion (e.g., the first adhesive portion 461a of FIG. 6B) adhered to the surface of the printed circuit board. According to an embodiment, the adhesive layer may include a second adhesive portion (e.g., the second adhesive portion 461b of FIG. 6B) spaced apart from the first adhesive portion and adhered to the other surface of the printed circuit board opposite to the surface of the printed circuit board. According to an embodiment, the indicator label may be spaced apart from the lateral surface of the printed circuit board.

According to an embodiment, the adhesive layer may include a first adhesive portion (e.g., the first adhesive portion 461a of FIG. 6B) adhered to the surface of the printed circuit board. According to an embodiment, the adhesive layer may include a second adhesive portion (e.g., the second adhesive portion 461b of FIG. 6B) adhered to the other surface of the printed circuit board opposite to the surface of the printed circuit board. According to an embodiment, the adhesive layer may include a third adhesive portion (e.g., the third adhesive portion 461c of FIG. 6B) spaced apart from the first adhesive portion and the second adhesive portion and adhered to the lateral surface of the printed circuit board.

According to an embodiment, an electronic device (e.g., the electronic device 400 of FIGS. 4A, 4B, and 4C) may include a display (e.g., the display 420 of FIGS. 4A, 4B, and 4C). According to an embodiment, the electronic device may include a housing (e.g., the housing 410 of FIGS. 4A, 4B, and 4C) including a seating surface (e.g., the seating surface 412 of FIG. 4C) facing the display, a lateral surface(e.g., the lateral surface 413 of the housing 410 of FIG. 4C) surrounding a periphery of the display, and a through hole (e.g., the through hole 414 of FIG. 4B and FIG. 4C) penetrating the lateral surface. According to an embodiment, the electronic device may include a printed circuit board (e.g., the printed circuit board 430 of FIG. 4C) disposed within the housing. According to an embodiment, the electronic device may include an interface circuit (e.g., the interface circuit 431 of FIG. 4C) disposed on a surface (e.g., the surface 430a of the printed circuit board 430 of FIG. 4C) of the printed circuit board. According to an embodiment, the electronic device may include an interface bracket, detachably coupled to the housing, having a portion (e.g., the portion 440a of the interface bracket 440 of FIG. 4C) of the interface bracket disposed within the through hole, and having another portion (e.g., the other portion 440b of the interface bracket 440 of FIG. 4C) facing a surface of the printed circuit board in a state of being inserted into the through hole. According to an embodiment, the electronic device may include a sealing member (e.g., the sealing member 470 of FIG. 4C) surrounding the portion of the interface bracket disposed in the through hole and contacting an inner surface of the through hole. According to an embodiment, the electronic device may include an indicator label (e.g., the indicator label 460 of FIG. 4C) that surrounds the surface of the printed circuit board and a lateral surface (e.g., the lateral surface 430c of the printed circuit board 430 of FIG. 4C) of the printed circuit board 430 facing the through hole, and is deformable by moisture introduced through the through hole from the outside of the electronic device. According to an embodiment, the indicator label may be visible from the outside of the electronic device in a state in which the interface bracket is extracted to the outside of the through hole.

According to an embodiment, the indicator label may surround the other surface (e.g., the other surface 430b of the printed circuit board 430 of FIG. 4C) of the printed circuit board facing the surface of the printed circuit board.

According to an embodiment, an outer surface (e.g., the outer surface 440c of the interface bracket 440 of FIG. 4C) of the interface bracket may be exposed to the outside of the electronic device in the state in which the interface bracket is inserted into the through hole.

According to an embodiment, the electronic device may further include an interface socket (e.g., the interface socket 432 of FIG. 4C) disposed on the surface of the printed circuit board and surrounding the portion of the interface bracket.

According to an embodiment, the printed circuit board may include a protective protrusion (e.g., the protective protrusion 434 of FIG. 5) protruding from the lateral surface of the printed circuit board.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a housing including a through hole connecting an outside of the electronic device and an inside of the electronic device;
a printed circuit board disposed within the housing;
an interface bracket having a portion of the interface bracket disposed within the through hole and another portion facing a surface of the printed circuit board;
a sealing member, surrounding the portion of the interface bracket, and contacting an inner surface of the through hole; and
an indicator label surrounding the surface of the printed circuit board and a lateral surface of the printed circuit board facing the through hole, and
wherein the indicator label is deformable by moisture introduced from the outside of the electronic device through the through hole;

2. The electronic device of claim 1,
wherein the indicator label is visible from the outside of the electronic device within a state in which the interface bracket is drawn out to an outside of the through hole.

3. The electronic device of any one of claims 1 and 2,
wherein the interface bracket is detachably coupled to the housing.

4. The electronic device of any one of claims 1 to 3,
wherein an outer surface of the interface bracket is exposed to the outside of the electronic device within a state in which the interface bracket is inserted into the through hole.

5. The electronic device of any one of claims 1 to 4, further comprising:
an interface circuit disposed on the surface of the printed circuit board; and
an interface chip, disposed on the interface bracket, and electrically connected to the interface circuit.

6. The electronic device of any one of claims 1 to 5, further comprising a display disposed on the housing; and
wherein the through hole is disposed at a lateral surface of the housing surrounding the display.

7. The electronic device of any one of claims 1 to 6,
wherein the indicator label surrounds another surface of the printed circuit board opposite to the surface of the printed circuit board.

8. The electronic device of any one of claims 1 to 7, further comprising an interface socket, disposed on the surface of the printed circuit board, and surrounding the portion of the interface bracket.

9. The electronic device of any one of claims 1 to 8,
wherein the printed circuit board includes a protective protrusion protruding from the lateral surface of the printed circuit board.

10. The electronic device of any one of claims 1 to 9,
wherein the interface bracket includes:
a first protrusion, disposed on a periphery of the interface bracket, and in contact with the surface of the printed circuit board;
a second protrusion, disposed on another periphery of the interface bracket facing the periphery of the interface bracket, being in contact with the surface of the printed circuit board, and spaced apart from the first protrusion; and
a connecting portion, disposed between the first protrusion and the second protrusion, and spaced apart from the surface of the printed circuit board, and
wherein the indicator label is disposed between the first protrusion and the second protrusion.

11. The electronic device of any one of claims 1 to 10,
wherein the indicator label includes:
an adhesive layer in contact with the printed circuit board;
a colorant layer disposed on the adhesive layer; and
an absorption layer disposed on the colorant layer.

12. The electronic device of any one of claims 1 to 11,
wherein the indicator label includes at least one absorption hole penetrating a periphery of the absorption layer.

13. The electronic device of any one of claims 1 to 12,
wherein the indicator label includes at least one absorption hole penetrating a portion of the absorption layer facing the lateral surface of the printed circuit board.

14. The electronic device of any one of claims 1 to 13,
wherein the adhesive layer includes:
a first adhesive portion adhered to the surface of the printed circuit board; and
a second adhesive portion, spaced apart from the first adhesive portion, and adhered to the another surface of the printed circuit board opposite to the surface of the printed circuit board, and
wherein the indicator label is spaced apart from the lateral surface of the printed circuit board.

15. The electronic device of any one of claims 1 to 14,
wherein the adhesive layer includes:
a first adhesive portion adhered to the surface of the printed circuit board; and
a second adhesive portion adhered to the another surface of the printed circuit board opposite to the surface of the printed circuit board; and
a third adhesive portion, spaced apart from the first adhesive portion and the second adhesive portion, and adhered to the lateral surface of the printed circuit board.
